Europäisches Patentamt

European Patent Office

Office européen des brevets

(19)

(11) **EP 0 707 254 B1**

(12) **EUROPÄISCHE PATENTSCHRIFT**

(45) Veröffentlichungstag und Bekanntmachung des Hinweises auf die Patenterteilung:
**03.05.2000 Patentblatt 2000/18**

(51) Int Cl.$^7$: **G05D 7/01**, G05D 7/03

(21) Anmeldenummer: **95115497.0**

(22) Anmeldetag: **30.09.1995**

(54) **Vorrichtung zur Regelung eines konstanten Abflusses aus einem Flüssigkeitsbehälter**

Device for regulating a constant flow out of a liquid reservoir

Dispositif pour régler un débouché invariable sur un réservoir à liquides

(84) Benannte Vertragsstaaten:
**AT BE CH DE DK FR GB IT LI LU NL SE**

(30) Priorität: **11.10.1994 DE 4436230**

(43) Veröffentlichungstag der Anmeldung:
**17.04.1996 Patentblatt 1996/16**

(73) Patentinhaber: **Steinhardt, Lothar, Dipl.-Ing.
D-65239 Hochheim (DE)**

(72) Erfinder: **Steinhardt, Lothar, Dipl.-Ing.
D-65239 Hochheim (DE)**

(74) Vertreter: **Quermann, Helmut, Dipl.-Ing.
Gustav-Freytag-Strasse 25
65189 Wiesbaden (DE)**

(56) Entgegenhaltungen:
**DE-A- 3 418 348        DE-A- 3 914 702
US-A- 3 995 435**

Printed by Jouve, 75001 PARIS (FR)

**Beschreibung**

Die Erfindung betrifft eine Vorrichtung zur Regelung eines konstanten Abflusses aus einem Flüssigkeitsbehälter, insbesondere einem Regenrückhalteraum, mit einer Auslauföffnung für die Flüssigkeit, wobei der Auslauföffnung ein bewegliches Drosselorgan zugeordnet ist, das in Abhängigkeit vom Flüssigkeitsspiegel den Auslauf der Flüssigkeit aus dem Behälter regelt.

Derartige Vorrichtungen zur Regelung eines konstanten Abflusses aus einem Flüssigkeitsbehälter sind aus dem Stand der Technik in vielfältiger Art und Weise bekannt. Sie bedienen sich meistens eines dem Flüssigkeitsspiegel folgenden Schwimmers, der über ein Gestänge oder dergleichen das Drosselorgan betätigt.

Um einen konstanten Abfluß aus einem Flüssigkeitsbehälter zu erzielen, muß die Auslauföffnung in Abhängigkeit vom Flüssigkeitsspiegel im Flüssigkeitsbehälter verändert werden. Maßgebend ist dabei die hydraulische Beziehung gemäß der folgenden Formel:

$$Q = \mu * A * \sqrt{(2 * g * H)}$$

wobei

Q   Abfluß
μ   Strömungsbeiwert
A   Durchtrittsfläche der Abflußöffnung
g   Erdbeschleunigung
H   Einstauhöhe vor dem Regelorgan

bedeutet. Aus der Formel geht hervor, daß die Fläche A in Abhängigkeit von der Einstauhöhe H verändert werden muß, um einen konstanten Abfluß zu erhalten.

Aus der DE 34 18 348 A1 ist eine Vorrichtung der eingangs genannten Art bekannt, die einen Reglerraum aufweist, mit einer Zulauföffnung, mit dieser zugeordnetem ersten Drosselorgan sowie mit einer Ablauföffnung, mit dieser zugeordnetem zweiten Drosselorgan, wobei die beiden Drosselorgane drehfest miteinander verbunden sind und über einen gemeinsamen, im Reglerraum angeordneten Schwimmer angetrieben werden. Eine derartige Gestaltung der Vorrichtung gestattet es, Verstopfungen im Bereich der Zulauföffnung des Reglerraumes selbsttätig zu beheben.

Aus der DE 39 14 702 A1 ist eine schwimmerbetätigte Vorrichtung zur Regelung eines konstanten Abflusses aus einem Flüssigkeitsbehälter bekannt, bei der gleichfalls ein Reglerraum mit Zulauf- und Ablauföffnung und diesen zugeordneten Drosselorganen vorhanden ist. Ein im Reglerraum angeordneter Schwimmer steuert über Steuerkurven die beiden Drosselorgane an. Auch diese Vorrichtung ist geeignet, Verstopfungen im Bereich der Zuflußöffnung zum Reglerraum selbsttätig zu beheben. Zusätzlich ist dort der Reglerraum als Glocke ausgebildet. Der luftdichte Abschluß führt bei einem Flüssigkeitseinstau in den Reglerraum zu einer Komprimierung der in ihm befindlichen Luft und somit zu einer Reduzierung des maximal erreichbaren Flüssigkeitsniveaus im Abflußmengenregler, womit dieser relativ niedrig bauen kann.

Der Nachteil der Schwimmerkonstruktionen zur Regelung eines konstanten Abflusses aus einem Flüssigkeitsbehälter ist in der hochreichenden Konstruktion und damit hohen Aufwand zu sehen, ferner im Umstand, daß mit Schwimmerkonstruktionen keine großen Stauhöhen beherrscht werden können, weil die Regelung des konstanten Abflusses durch die maximale Schwimmerstellung begrenzt ist.

Aus der US-A-3 995 435 ist eine Vorrichtung zur Regelung eines Abflusses aus einem Flüssigkeitsbehälter mit einer Auslauföffnung für die Flüssigkeit bekannt. Der Auslauföffnung ist ein bewegliches Drosselorgan zugeordnet, das als um eine stationäre Achse schwenkbare Klappe ausgebildet ist. Diese regelt den Auslauf aus dem Behälter in Abhängigkeit vom Flüssigkeitsspiegel. Ein durch Änderung des Flüssigkeitsdruckes formveränderliches Bauteil in Art eines Balges steuert das Drosselorgan an. Der Balg ist zwischen der Klappe und einer mittels einer Stellschraube verstellbaren Platte angeordnet, wobei der Druck der Flüssigkeit die Innenseite des Balges beaufschlagt. Die Abblendbewegung der Klappe erfolgt gegen die Rückstellkraft eines mit der Klappe verbundenen Gegengewichtes. Aufgrund dieser konstruktiven Ausbildung der Vorrichtung und der in Abhängigkeit von der Einstauhöhe der Flüssigkeit linearen Bewegung der Klappe ist keine Regelung eines konstanten Abflusses aus dem Flüssigkeitsbehälter möglich.

Es ist Aufgabe der vorliegenden Erfindung, eine Vorrichtung zur Regelung eines konstanten Abflusses aus einem Flüssigkeitsbehälter zu schaffen, die, in kompakter Bauart ohne Schwimmer, eine Regelung auch bei großen Stauhöhen gestattet.

Gelöst wird die Aufgabe bei einer Vorrichtung der eingangs genannten Art dadurch, daß ein in Abhängigkeit vom Flüssigkeitsdruck formveränderliches Bauteil das Drosselorgan ansteuert, wobei das formveränderliche Bauteil auf seiner Außenseite vom Druck der Flüssigkeit beaufschlagt ist und die Abblendbewegung des Drosselorganes gegen eine Rückstellkraft erfolgt.

Erfindungsgemäß wird damit die Druckveränderung infolge veränderten Flüssigkeitsspiegels an einer definierten Stelle des die Flüssigkeit aufnehmenden bzw. von ihm durchflossenen Systems genutzt, um eine Formveränderung eines in der Flüssigkeit befindlichen Bauteiles zu bewirken, wobei diese Formveränderung, aufgrund der Ansteuerung des Drosselorganes über das formveränderliche Bauteil, eine Abblendung der Auslauföffnung bewirkt. Das formveränderliche Bauteil befindet sich dabei vorteilhaft im Behälter, d.h. im Bereich des Oberwassers und regelt damit den Auslauf insbesondere aufgrund des dort vorhandenen Flüssigkeitsspiegels.

Das formveränderliche Bauteil kann auf die unterschiedlichste Art und Weise gestaltet sein. Es kommt beispielsweise ein elastisches Bauteil in Frage, das infolge des einwirkenden Flüssigkeitsdruckes zusammengedrückt wird und hierdurch das Drosselorgan betätigt, wobei die elastischen Rückstellkräfte bewirken, daß sich das formveränderliche Bauteil bei geringerem Druck, d.h. bei gesunkenem Flüssigkeitsspiegel, wieder ausdehnt und das Drosselorgan die Auslauföffnung weniger stark abblendet. Das formveränderliche Bauteil kann auch als Hohlkörper ausgebildet sein, insbesondere mit im Innenraum des Bauteiles befindlicher Luft. Die Rückstellkräfte können aus der Elastizität des Bauteiles oder durch eine zusätzliche Feder oder Luft, die insbesondere im Inneren des Bauteiles wirksam sind, aufgebracht werden. Grundsätzlich kann das formveränderliche Bauteil auf unterschiedlichste Art und Weise ausgebildet sein, beispielsweise als elastische Kugel, ballonartiges Bauteil, Zylinder mit zwei relativ zueinander verschiebbaren, gegeneinander abgedichteten Zylinderhälften, Faltenbalg mit Rückstellfeder usw..

Die Erfindung ist nicht darauf beschränkt, daß das formveränderliche Bauteil nur in Abhängigkeit vom Flüssigkeitsdruck im Behälter angesteuert wird. Es ist durchaus möglich, den Druck, der nachfolgend zum Behälter herrscht, zur Steuerung des formveränderlichen Bauteiles zu verwenden. Bei diesem nachfolgend zum Behälter herrschenden Druck kann es sich beispielsweise um Umgebungsdruck oder um den Druck des Unterwassers, d.h. den Wasserdruck, der hinter der Auslauföffnung herrscht (Rückstau), handeln.

Eine besondere Ausgestaltung der vorliegenden Erfindung sieht vor, daß bei einem hohl ausgebildeten formveränderlichen Bauteil dessen Innenraum mit einem zum Außendruckniveau des Bauteils unterschiedlichen Druckniveau in Verbindung steht. Konstruktiv kann dies beispielsweise dadurch erfolgen, daß eine Leitung vorgesehen ist, die den Innenraum des formveränderlichen Bauteiles mit dem Umgebungsdruck oder dem Druck des Unterwassers verbindet.

Eine weitere Einflußnahme auf die Regelung des Abflusses aus dem Flüssigkeitsbehälter kann erreicht werden, wenn das formveränderliche Bauteil und das Drosselorgan, das beispielsweise als Blende ausgebildet ist, von einer Glocke mit einer Einlauföffnung umgeben ist. Zwischen Einlauföffnung der Glocke und Auslauföffnung kann zusätzlich ein Achsversatz vorgesehen sein, womit eine Umlenkung der Flüssigkeit in der Glocke stattfindet, was eine Energievernichtung zur Folge hat. Hierdurch steigt der Druck in der Glocke, und es entsteht damit eine größere Kraft zur Verschiebung des formveränderlichen Bauteiles. Um Verstopfungen der Einlauföffnung der Glocke beheben zu können, sollte der Einlauföffnung gleichfalls ein mittels des formveränderlichen Bauteiles bewegbares Drosselorgan zugeordnet sein. Um eine exakte Regelung des konstanten Ausflusses bewerkstelligen zu können, sollte das formveränderliche Bauteil über eine Steuerkurve/Steuerscheibe das Drosselorgan bzw. die Drosselorgane ansteuern. Eine Glocke ermöglicht im übrigen, die Regelvorrichtung auch außerhalb des Flüssigkeitsbehälters zu installieren, z.B. in einem Nachschacht oder als Zwischenbauteil in Druckleitungen ("trockene Aufstellung" bzw. "Unterwasseranordnung").

Bei sehr kleinen Abflüssen müssen die Drosselorgane schon in der Grundstellung ohne Einstau der Ein- bzw. Auslauföffnung beide etwas abblenden, um keinen Mehrabfluß bei beginnendem Einstau zu erhalten. Als zusätzliche Einrichtung für kleine Abflüsse sollte daher ein Antrieb vorgesehen sein, der es ermöglicht, die Lagerung des formveränderlichen Bauteiles in einer Richtung senkrecht zum Flüssigkeitsniveau zu verschieben. Schließlich kann ein Mechanismus zur Verstellung der Rückstellkraft des formveränderlichen Bauteiles vorgesehen sein.

Weitere Merkmale der Erfindung sind in den Unteransprüchen, der Beschreibung der Figuren und den Figuren selbst dargestellt, wobei bemerkt wird, daß alle Einzelmerkmale und Kombinationen von Einzelmerkmalen erfindungswesentlich sind.

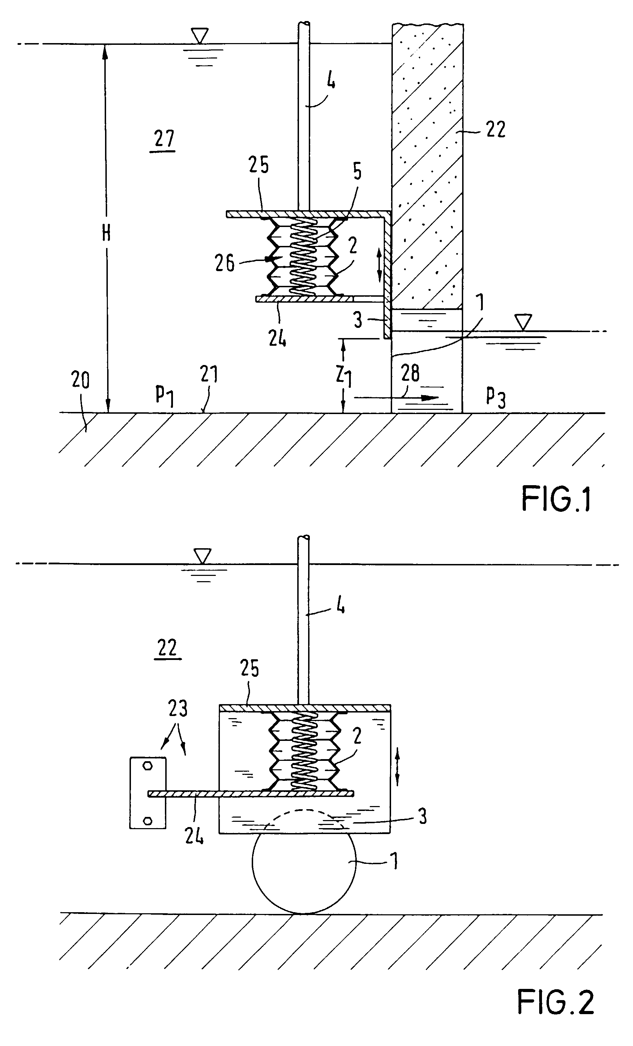

In den Figuren 1 bis 13 ist die Erfindung anhand der grundsätzlichen Gestaltung des formveränderlichen Bauteiles in Art eines Faltenbalges für mehrere Varianten dargestellt, ohne hierauf beschränkt zu sein. Es zeigt:

| | |
|---|---|
| Figur 1 | einen Längsschnitt durch einen Regenrückhalteraum mit der erfindungsgemäßen Vorrichtung zur Regelung des Abflusses, |
| Figur 2 | einen Querschnitt durch den in Figur 1 gezeigten Regenrückhalteraum mit Regelvorrichtung, |
| Figur 3 | einen Längsschnitt gemäß Figur 1, wobei die Regelvorrichtung zwei Drosselorgane und eine Glocke aufweist, |
| Figur 4 | einen Querschnitt durch den in Figur 3 gezeigten Regenrückhalteraum mit Regelvorrichtung, |
| Figur 5 | einen Längsschnitt gemäß Figur 3, wobei die Regelvorrichtung eine Steuerkurve aufweist, |
| Figur 6 | einen Querschnitt durch den Regenrückhalteraum mit Regelvorrichtung gemäß Figur 5, |
| Figur 7 | eine Detaildarstellung eines Mechanismus zur Verstellung der Federvorspannung, mit der der Abfluß des Reglers feinjustiert werden kann, |
| Figur 8 | einen Querschnitt durch den Regenrückhalteraum mit Regelvorrichtung zur Verdeutlichung eines Achsversatzes zwischen Einlauföffnung und Auslauföffnung der Glocke, |
| Figur 9 | einen Längsschnitt durch den Regenrückhalteraum mit Regelvorrichtung zur Verdeutlichung der unterschiedlichen Öff- |

nungshöhen von Einlauföffnung und Auslauföffnung der Glocke,

Figur 10 einen Querschnitt durch den Regenrückhalteraum mit Regelvorrichtung mit einem zusätzlichen Bewegungsglied in Art eines Faltenbalges zum Regeln kleiner Abflüsse,

Figur 11 einen Querschnitt durch den Regenrückhalteraum mit Regelvorrichtung, bei dem das zusätzliche Bewegungsglied als elektrischer, hydraulischer oder pneumatischer Antrieb ausgebildet ist,

Figur 12 die Detaildarstellung eines Antriebes zum Feinjustieren des Abflusses des Reglers, und

Figur 13 eine Anordnung der Regelvorrichtung mit Glocke außerhalb des Flüssigkeitsbehälters.

Die Figuren 1 und 2 zeigen den Abflußbereich des Regenrückhalteraumes. Verdeutlicht ist der Beckenboden 20 mit der Beckensohle 21 und die abflußseitige Wand 22 mit der Auslauföffnung 1. Geringfügig oberhalb der Auslauföffnung 1 ist eine Konsole 23 innerhalb des Regenrückhalteraumes an der Stirnwand 22 befestigt. Die Konsole 23 weist eine etwa horizontal ausgerichtete Lagerplatte 24 auf. Zwischen einem Abschnitt der Lagerplatte 24 und der Ablaufwand 22 ist ein Drosselorgan in Art einer Blende 3 durchgeführt, wobei der plattenförmige Blendenkörper in unmittelbarer Nähe parallel zur Stirnwand 22 positioniert und vertikal beweglich ist. Die Blende 3 weist in der Querschnittsansicht des Regenrückhalteraumes eine rechteckige Fläche auf. Der obere Bereich der Blende 3 ist mit einem plattenförmigen Lageransatz 25 versehen, der sich oberhalb und parallel zur Lagerplatte 24 der Konsole 23 erstreckt. Zwischen der Lagerplatte 24 und dem Lageransatz 25 ist ein Faltenbalg 2 angeordnet, der im Bereich seiner beiden Stirnflächen in nicht näher verdeutlichter Art und Weise mit der Lagerplatte 24 bzw. dem Lageransatz 25 verbunden ist. Der Faltenbalg 2 umschließt einen Innenraum 26, in dem eine spiralförmige Druckfeder 5 angeordnet ist, die sich an der Lagerplatte 24 und dem Lageransatz 25 abstützt und damit das Bestreben hat, diese auseinanderzudrükken. Im Innenraum 26 des Faltenbalges 2 herrscht Umgebungsdruck $p_u$. Dies wird durch eine Entlüftungsleitung 4 erreicht, die mit ihrem einen Ende mit dem Innenraum 26 des Faltenbalges 3 verbunden ist und deren anderes Ende über den maximalen Flüssigkeitsspiegel des Oberwassers, d.h. des im Regenrückhalteraum 27 befindlichen Wassers geführt ist.

In der Figur 1 ist zusätzlich die Einstauhöhe H vor der Blende 3, der Oberwasserdruck $p_1$, die freie Öffnungshöhe $Z_1$ der Auslauföffnung 1 und der Wasserdruck $p_3$ des Unterwassers sowie der jeweilige Flüssigkeitsspiegel des Oberwassers sowie der des Unterwassers verdeutlicht. Die Strömungsrichtung des Wassers ist mittels des Pfeiles 28 veranschaulicht.

Eine Regelung des Abflusses im Sinne der eingangs genannten Gleichung erfolgt auf einfache Art und Weise dadurch, daß der Faltenbalg 2, womit im weitesten Sinne auch ein Kompensator, ein Spiralschlauch o.ä. gemeint sind, beim Ansteigen des Oberwasserspiegels und damit des Oberwasserdruckes $p_1$ zusammengedrückt und die Blende 3 nach unten bewegt wird. Die im Faltenbalg 2 befindliche Luft wird hierbei über die Entlüftungsleitung 4 an die Umgebungsluft abgegeben. Bei sinkendem Oberwasserdruck $p_1$ wird die Blende entweder durch die Eigenfederkraft des Faltenbalges 2 oder, auf das vorstehende Ausführungsbeispiel bezogen, durch die Druckfeder 5, wieder nach oben bewegt, womit die Blende 3 wieder angehoben wird und sich die Durchtrittsfläche A der Abflußöffnung 1 vergrößert.

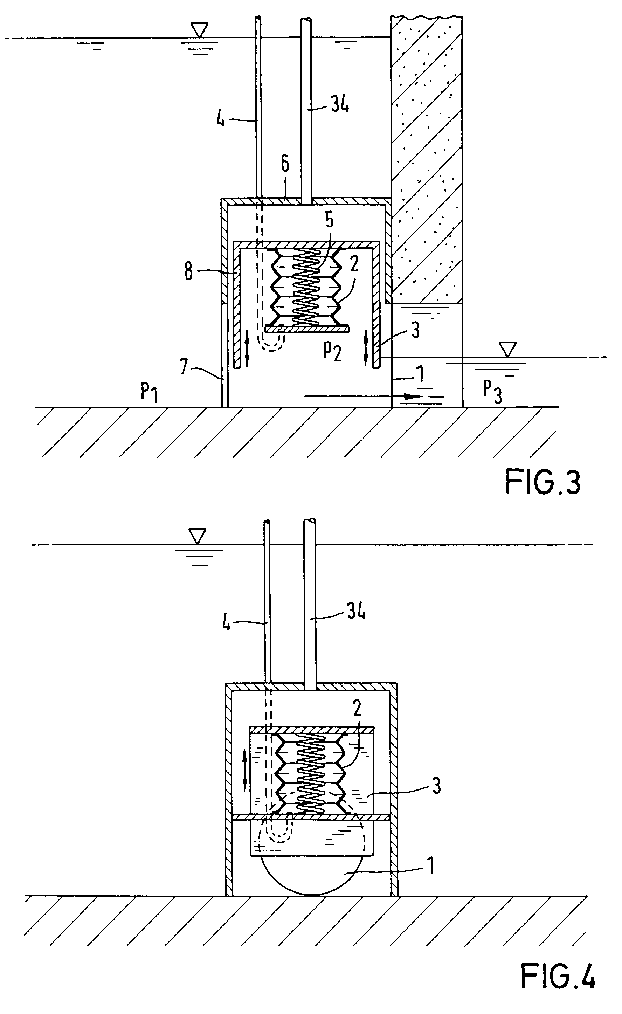

Die bei den Varianten nach den Figuren 3 bis 12 gezeigten Bauteile, die mit den Bauteilen der Variante nach den Figuren 1 und 2 übereinstimmen, sind der Einfachheit halber mit denselben Bezugsziffern bezeichnet.

Die Figuren 3 und 4 zeigen eine Variante, die es ermöglicht, eine Verstopfung der Abflußöffnung der Regelvorrichtung zu beheben. Dies wird erreicht, indem der zu den Figuren 1 und 2 beschriebene Aufbau unter einer Glocke 6 angebracht wird und an der Einlauföffnung 7 mit der freien Öffnungshöhe $Z_7$ der Glocke 6 ein weiteres Drosselorgan in Art einer Blende 8 positioniert wird. Diese Blende 8 ist starr mit der Auslaufblende 3 verbunden. Steigt der Oberwasserspiegel an, so stellt sich in der Glocke 6 ein Druck $p_2$ ein, der etwa der Hälfte des Oberwasserdruckes $p_1$ entspricht. Durch den Druck $p_2$ wird der Faltenbalg 2 zusammengedrückt und die Blenden 3 und 8 nach unten bewegt.

Tritt nun eine Verstopfung ein, wird sich diese an der Blende 8 einstellen, da diese Blende die erste Querschnittsverengung am Regelorgan darstellt. Durch den verminderten Zulauf entleert sich die Glocke 6 über die Ablauföffnung 1. Der Druck $p_2$ wird etwa gleich dem Druck $p_3$, wodurch sich der Faltenbalg 2 wieder in seine ursprüngliche Länge ausdehnt. Die Blenden 3 und 8 werden angehoben und die Verstopfung ausgespült. Danach stellt sich in der Glocke 6 wieder etwa der halbe Druck des Oberwassers $p_1$, also $p_2$, ein. Der Regler geht wieder in Regelstellung. Bei der Ausführungsform gemäß der Figuren 3 und 4 mit der Glocke 6 ist zusätzlich zur Entlüftungsleitung 4 des Faltenbalges 2 eine mit der Glocke 6 verbundene Entlüftungsleitung 34 vorgesehen. Infolge der Entlüftung der Glocke 6 wird durch Verwirbelungsvorgänge der Durchfluß durch den Regler verringert. Hierdurch ist es möglich, bei gleichem, Durchfluß eine große Öffnung freizugeben, die Verstopfungsgefahr wird dadurch geringer.

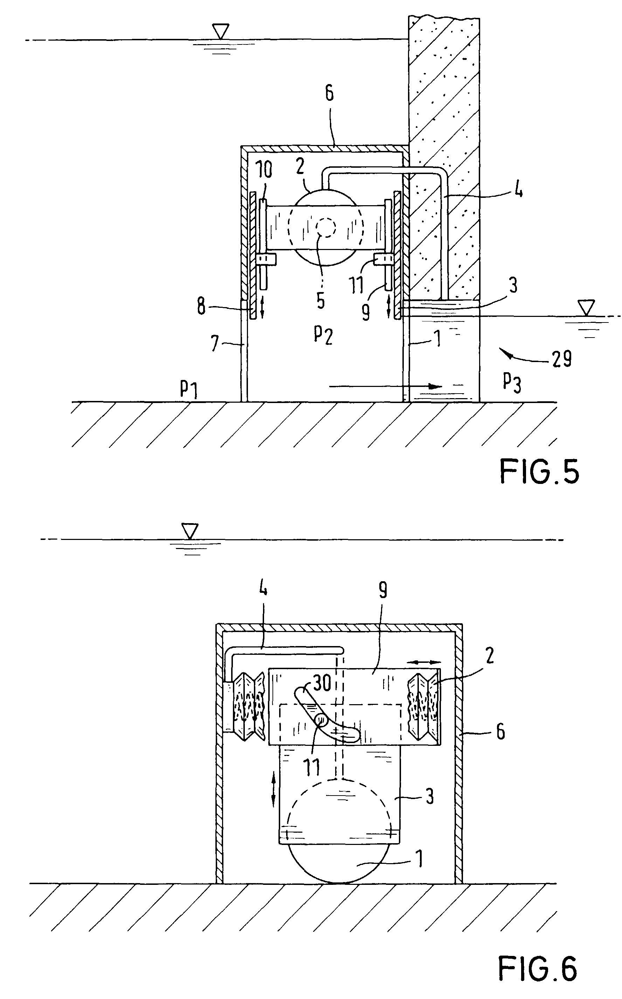

Aus der eingangs genannten Gleichung geht hervor, daß z.B. beim Ansteigen des Wasserspiegels auf das Doppelte, sich die jeweilige Auslauffläche nur auf das 0,71-fache, nicht 0,5-fache, verkleinern darf, wenn der Abfluß Q konstant bleiben soll. Diese Wurzelfunktion läßt sich mit den zu den Figuren 1 bis 4 beschriebenen Aufbauten in der technischen Anwendung schlecht realisieren, da die Federraten eines Faltenbalges oder auch einer zusätzlichen Feder in der Regel in etwa linear sind. Eine Ausgestaltung der erfindungsgemäßen Vorrichtung, die die Wurzelfunktion bei der Abflußregelung berücksichtigt, ist in den Figuren 5 und 6 beschrieben. Dort ist der Faltenbalg 2 liegend angeordnet und innen mit der Druckfeder 5 versehen. Die Entlüftung 4 des Faltenbalginnenraumes 26 erfolgt in den abgehenden Kanal 29. Der Faltenbalg 2 befindet sich unter der Glocke 6. Beim Zusammendrücken des Faltenbalges 2 werden zwei Steuerscheiben 9 und 10 horizontal verschoben. In diesen Steuerscheiben ist jeweils eine Führungsnut 30 eingefräst, die die lineare Bewegung des Faltenbalges 2 auf eine Wurzelfunktionsbewegung der vertikal beweglich gelagerten Blenden 3 und 8 überträgt. Die Übertragung der Bewegung auf die Blenden erfolgt z.B. durch Rollen 11, die an den Blenden 3 und 8 befestigt sind.

Wesentlich ist bei den in den Figuren 5 und 6 beschriebenen Varianten, daß bei einem Rückstau in die Entlüftungsleitung 4 des Faltenbalges 2, d.h. bei einem Druckverhältnis $p_3 > p_u$, der Faltenbalg entsprechend dem Rückstau auseinandergedrückt wird. Die Regelung erfolgt somit entsprechend der Druckdifferenz zwischen Oberwasser $p_1$ und Unterwasser $p_3$ mit konstantem Abfluß. Dies bedeutet, daß ein derart konzipierter Regler auch auf Rückstau reagiert und automatisch entsprechend der Druckdifferenz regelt.

Die in den Figuren 5 und 6 beschriebene Regelvorrichtung stellt einen konstanten Abfluß sicher, egal, wie hoch das Wasser aufsteigt. Der Abfluß ist hierbei durch Einsatz verschiedener Steuerscheiben 9 und 10 veränderbar. Es erfolgt ein selbsttätiges Öffnen bei Verlegung und ein automatisches Erkennen von Rückstau und entsprechendes proportionales Regeln. Die Regelvorrichtung ist sehr kompakt gebaut und kann wahlweise vor oder hinter der Wandöffnung eingesetzt werden.

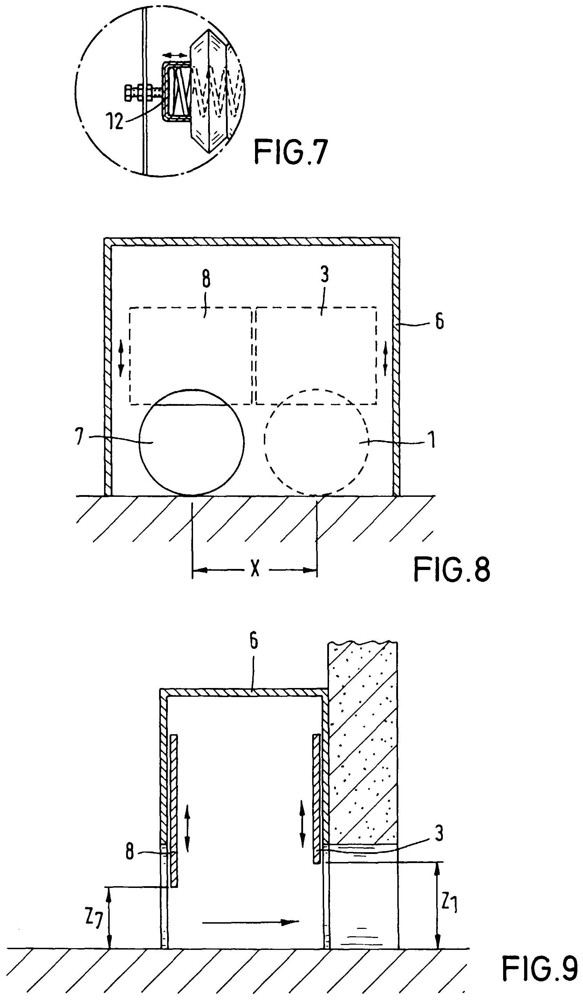

Figur 7 zeigt einen Mechanismus 12 zum Verstellen der Vorspannung der Druckfeder 5 des Faltenbalges 2. Durch diese Verstellung der Federvorspannung kann der Abfluß des Reglers feinjustiert werden.

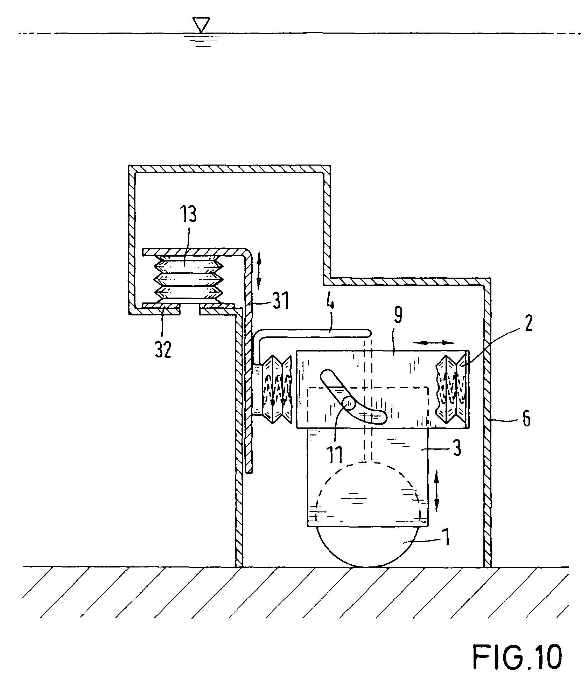

Figur 8 zeigt einen Achsversatz zwischen Einlauföffnung 7 der Glocke 6 und Auslauföffnung 1 mit dem Maß X. Hierdurch findet in der Glocke 6 eine Umlenkung des Wassers statt, was eine Energievernichtung zur Folge hat. Der Druck $p_2$ in der Glocke 6 steigt dadurch auf über die Hälfte des Oberwasserdruckes $p_1$ an. Somit entsteht ein größerer Druck $p_2$ zur Verschiebung des Faltenbalges 2, als derjenige Druck $p_2$, der sich dort ohne Achsversatz einstellen würde. Die Fläche der Einlauföffnung 7 sollte stets größer als die der Auslauföffnung 1 sein. Bezogen auf den Druck der sich bei gleichgroßen Einlauf- und Auslauföffnungen einstellen würde, wird dadurch der Druck in der Glocke 6 zusätzlich erhöht. Figur 9 veranschaulicht, daß die maximale Öffnungshöhe $Z_7$ der Einlauföffnung 7 stets kleiner sein sollte als die der Auslauföffnung 1, so daß eventuell auftretende Verlegungen an der Einlauföffnung 7 erfolgen, womit eine selbsttätige Öffnung stattfindet.

Bei sehr kleinen Abflüssen blenden die Blenden schon in der Grundstellung ohne Einstau die Ein- bzw. Auslauföffnung etwas ab, um keinen Mehrabfluß bei beginnendem Einstau zu erhalten. Bei einer eventuellen Verlegung öffnet dann der zu den Figuren 5 bis 9 beschriebene Aufbau auch nur bis zu dieser Blendengrundstellung. Als zusätzliche Einrichtung für kleine Abflüsse kann gemäß figur 10 zu dem oben beschriebenen Aufbau noch ein weiterer Faltenbalg 13 oder ein anderes Bewegungssystem eingebaut werden, das eine Verschiebung des Faltenbalges 2 bewirkt. Dies erfolgt beispielsweise dadurch, daß der weitere Faltenbalg 13 zwischen einer beweglichen Konsole 31, an der der Faltenbalg 2 befestigt ist, und einer stationären Konsole 32, insbesondere einer an der Stirnwand 22 befestigten Konsole angeordnet ist. Der Faltenbalg 13 dehnt sich nur dann aus, wenn der Differenzdruck zwischen Oberwasser $p_1$ und Glocke 6 - $p_2$ - einen bestimmten Wert überschreitet. Dies ist dann der Fall, wenn oberwasserseitig ein hoher Druck $p_1$ vorhanden ist, die Glocke 6 jedoch aufgrund einer Verlegung leergelaufen ist ($p_3 =$ ca. $p_u$). In diesem Fall würde sich der Faltenbalg 13 bewegen und die Blenden 3 und 8 zusätzlich zu der selbsttätigen Öffnung des oben beschriebenen Faltenbalges 2 bis zur völligen Freigabe der Öffnungen 1 und 7 anheben.

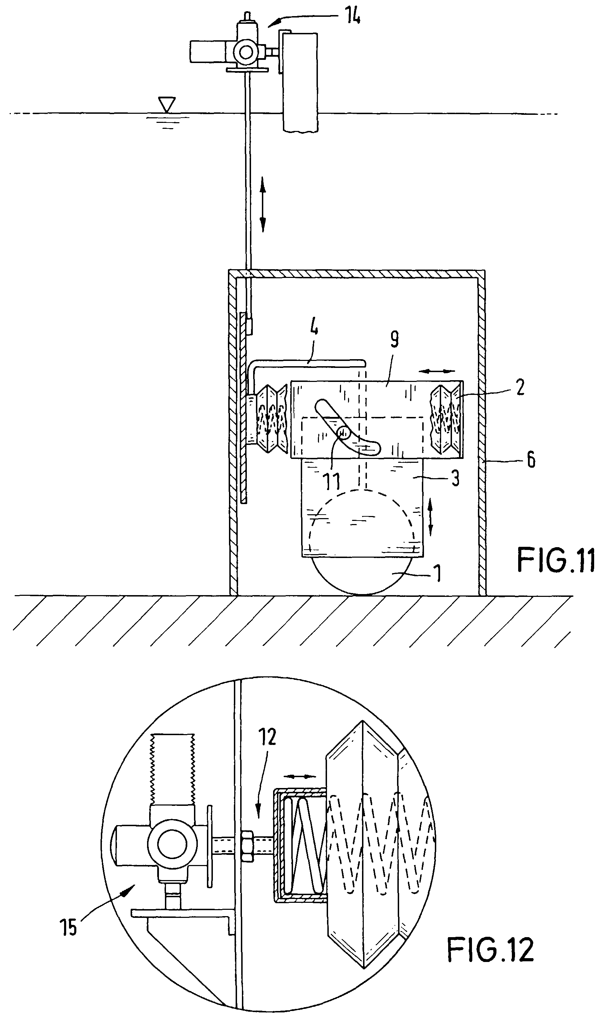

Anstelle des zusätzlichen Faltenbalges 13 kann, wie der Darstellung der Figur 11 zu entnehmen ist, auch ein elektrischer, hydraulischer, pneumatischer Antrieb 14 o.ä. angebracht werden, der wahlweise auch über ein Fernwirksystem steuerbar ist. Damit ist der Regler auch via Fernwirksystem zu bedienen, d.h. der Abfluß einzustellen oder die nachfolgenden Kanäle zu spülen. Desweiteren kann, wie in Figur 12 verdeutlicht, an dem Verstellmechanismus 12 ein Antrieb 15 angebracht werden, der es gestattet, über ein Fernwirksystem den Abfluß des Reglers zu justieren. Grundsätzlich können die Antriebe 14,15 auch manuell betrieben werden.

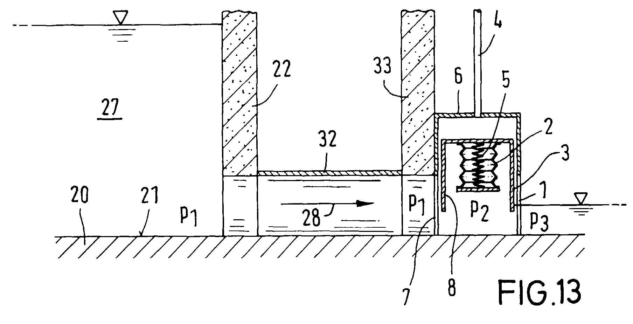

Figur 13 veranschaulicht die grundsätzlich gemäß der Darstellung in Figur 3 ausgebildete Regelvorrichtung mit Glocke 6, wobei diese Regelvorrichtung aber außerhalb des Behälters 27 an einer weiteren Wand 33 befestigt ist. Ein mit der Auslauföffnung des Behälters 27 verbundenes Rohr 32 führt das abfließende Wasser unter dem Druck $p_1$ bis zur Einlauföffnung des Reglers. In diesem stellt sich der Druck $p_2$ genauso ein, wie bei der Ausführungsform nach Figur 3.

**Patentansprüche**

1. Vorrichtung zur Regelung eines konstanten Abflusses aus einem Flüssigkeitsbehälter, insbesondere einem Regenrückhalteraum, mit einer Auslauföffnung für die Flüssigkeit, wobei der Auslauföffnung ein bewegliches Drosselorgan zugeordnet ist, das in Abhängigkeit vom Flüssigkeitsspiegel den Auslauf der Flüssigkeit aus dem Behälter regelt, <u>dadurch gekennzeichnet,</u> daß ein in Abhängigkeit vom Flüssigkeitsdruck formveränderliches Bauteil (2) das Drosselorgan (3, 8) ansteuert, wobei das formveränderliche Bauteil (2) auf seiner Außenfläche vom Druck der Flüssigkeit beaufschlagt ist und die Abblendbewegung des Drosselorgans (3, 8) gegen eine Rückstellkraft (5) erfolgt.

2. Vorrichtung nach Anspruch 1, dadurch gekennzeichnet, daß das formveränderliche Bauteil (2) in Abhängigkeit vom Flüssigkeitsdruck ($p_1$, $p_2$) im Behälter (27) und/oder dem Druck ($p_3$, $p_u$), der nachfolgend dem Behälter (27) herrscht, gesteuert wird.

3. Vorrichtung nach Anspruch 1 oder 2, dadurch gekennzeichnet, daß das formveränderliche Bauteil (2) in Abhängigkeit vom Umgebungsluftdruck ($p_u$) gesteuert wird.

4. Vorrichtung nach einem der Ansprüche 1 bis 3, dadurch gekennzeichnet, daß das formveränderliche Bauteil (2) längenveränderlich ist, insbesondere senkrecht zum Flüssigkeitsniveau längenveränderlich ist.

5. Vorrichtung nach einem der Ansprüche 1 bis 4, dadurch gekennzeichnet, daß die das formveränderliche Bauteil (2) rückstellende Kraft durch eine Feder (5) aufgebracht wird.

6. Vorrichtung nach einem der Ansprüche 1 bis 5, dadurch gekennzeichnet, daß das formveränderliche Bauteil als Faltenbalg (2), Zylinder oder dergleichen ausgebildet ist.

7. Vorrichtung nach einem der Ansprüche 1 bis 6, dadurch gekennzeichnet, daß das formveränderliche Bauteil (2) hohl ausgebildet ist und dessen Innenraum (26) mit einem zum Außendruckniveau ($p_1$, $p_2$) des Bauteils (2) verschiedenen Druckniveau ($p_3$, $p_u$) in Verbindung steht.

8. Vorrichtung nach Anspruch 7, dadurch gekennzeichnet, daß eine Leitung (4) vorgesehen ist, die den Innenraum (26) des formveränderlichen Bauteiles (2) mit dem Umgebungsluftdruck ($p_u$) oder dem Wasserdruck ($p_3$), der hinter der Auslauföffnung (1) herrscht, verbindet.

9. Vorrichtung nach einem der Ansprüche 1 bis 8, dadurch gekennzeichnet, daß das formveränderliche Bauteil (2) im Behälter (22) gelagert ist, wobei der relativ zum Lager bewegliche Abschnitt des formveränderlichen Bauteiles (2) das Drosselorgan (3, 8) ansteuert.

10. Vorrichtung nach Anspruch 9, dadurch gekennzeichnet, daß das formveränderliche Bauteil (2) in einer Konsole (31) gelagert ist, die mittels eines Antriebes (13, 14) senkrecht zum Flüssigkeitsniveau verschieblich im Behälter (23) gelagert ist.

11. Vorrichtung nach einem der Ansprüche 1 bis 10, dadurch gekennzeichnet, daß das Drosselorgan als Blende (3, 8) ausgebildet ist.

12. Vorrichtung nach einem der Ansprüche 1 bis 11, dadurch gekennzeichnet, daß das formveränderliche Bauteil (2) und die Blende (3, 8) von einer Glocke (6) mit einer Einlauföffnung (7) umgeben ist.

13. Vorrichtung nach Anspruch 12, dadurch gekennzeichnet, daß die Einlauföffnung (7) der Glocke (6) zur Auslauföffnung (1) des Behälters einen Achsversatz (X) aufweist.

14. Vorrichtung nach Anspruch 12 oder 13, dadurch gekennzeichnet, daß in der Glocke (6) benachbart der Einlauföffnung (7) ein weiteres, mittels des formveränderlichen Bauteils (2) bewegbares Drosselorgan (8) vorgesehen ist.

15. Vorrichtung nach einem der Ansprüche 9 bis 14, dadurch gekennzeichnet, daß das formveränderliche Bauteil (2) unmittelbar oder über eine Steuerkurve (9, 10) mittelbar das Drosselorgan (2) bzw. die Drosselorgane (2, 8) ansteuert.

16. Vorrichtung nach einem der Ansprüche 1 bis 15, dadurch gekennzeichnet, daß ein Mechanismus (12, 15) zur Verstellung der Rückstellkraft des formveränderlichen Bauteiles (2) vorgesehen ist.

**Claims**

1. An apparatus for regulating a constant discharge from a liquid container, particularly a rain retaining space, having an outflow opening for the liquid, wherein a movable throttle element, which controls the outflow of the liquid from the container depending on the liquid level, is associated with the outflow opening, <u>characterised in that</u> a component (2) which can change its shape depending on the liquid pressure operates the throttle element (3, 8), wherein the component (2) which can change its shape is acted upon on its outer surface by the pressure of the liquid and the throttling movement of the throttle element (3, 8) is executed against a restoring force (5).

2. An apparatus according to claim 1, characterised in that the component (2) which can change its shape is controlled depending on the liquid pressure ($p_1$, $p_2$) in the container (27) and/or depending on the pressure ($p_3$, $p_u$) which prevails downstream of the container (27).

3. An apparatus according to claims 1 or 2, characterised in that the component (2) which can change its shape is controlled depending on the ambient atmospheric pressure ($p_u$).

4. An apparatus according to any one of claims 1 to 3, characterised in that the component (2) which can change its shape is capable of changing its length, and in particular is capable of changing its length perpendicularly to the liquid level.

5. An apparatus according to any one of claims 1 to 4, characterised in that the restoring force which acts on the component (2) which can change its shape is applied by a spring (5).

6. An apparatus according to any one of claims 1 to 5, characterised in that the component which can change its shape is constructed as an expansion bellows (2), a cylinder or the like.

7. An apparatus according to any one of claims 1 to 6, characterised in that the component (2) which can change its shape is of hollow construction and the interior space (26) thereof communicates with a pressure level ($p_3$, $p_u$) which is different from the external pressure level ($p_1$, $p_2$) on the component (2).

8. An apparatus according to claim 7, characterised in that a line (4) is provided which connects the interior space (26) of the component (2) which can change its shape to the ambient atmospheric pressure ($p_u$) or the water pressure ($p_3$) which prevails downstream of the outflow opening (1).

9. An apparatus according to any one of claims 1 to 8, characterised in that the component (2) which can change its shape is mounted in the container (22), wherein the section, which can move in relation to the mounting, of the component (2) which can change its shape operates the throttle element (3, 8).

10. An apparatus according to claim 9, characterised in that the component (2) which can change its shape is mounted in a bracket (31) which is mounted so that it can be displaced in the container (23), perpendicular to the liquid level, by means of a drive (13, 14).

11. An apparatus according to any one of claims 1 to 10, characterised in that the throttle element is constructed as a diaphragm (3, 8).

12. An apparatus according to any one of claims 1 to 11, characterised in that the component (2) which can change its shape, and the diaphragm (3, 8), are surrounded by a bell (6) having an inlet opening (7).

13. An apparatus according to claim 12, characterised in that the inlet opening (7) of the bell (6) has an axial offset (X) in relation to the outflow opening (1) of the container.

14. An apparatus according to claims 12 or 13, characterised in that a further throttle element (8), which can be moved by means of the component (2) which can change its shape, is provided in the bell (6) adjacent to the outflow opening (7).

15. An apparatus according to any one of claims 9 to 14, characterised in that the component (2) which can change its shape operates the throttle elements (2) or throttle elements (2, 8) directly, or indirectly via a control cam (9, 10).

16. An apparatus according to any one of claims 1 to 15, characterised in that a mechanism (12, 15) is provided for adjusting the restoring force of the component (2) which can change its shape.

## Revendications

1. Dispositif pour le réglage d'un écoulement constant à partir d'un récipient de liquide, en particulier d'un compartiment de retenue des eaux de pluie, comprenant une ouverture d'évacuation pour le liquide, un organe d'étranglement mobile étant attribué à l'ouverture d'évacuation, qui règle, en fonction du niveau du liquide, l'évacuation du liquide hors du récipient, caractérisé en ce qu'un composant (2), dont la forme se modifie en fonction de la pression exercée par le liquide, excite l'organe d'étranglement (3, 8), la pression de liquide s'exerçant sur la surface du composant (2) dont la forme se modifie, si bien que l'on obtient un mouvement de diaphragmation de l'organe d'étranglement (3, 8) à l'encontre d'une force de rappel (5).

2. Dispositif selon la revendication 1, caractérisé en ce que le composant (2) dont la forme se modifie, est commandé en fonction de la pression de liquide ($P_1$, $P_2$) régnant dans le récipient (27) et/ou de la pression ($P_3$, $P_u$) qui règne par la suite dans le récipient (27).

3. Dispositif selon la revendication 1 ou 2, caractérisé en ce que le composant (2) dont la forme se modifie, est commandé en fonction de la pression ($P_u$) de

l'air ambiant.

4. Dispositif selon l'une quelconque des revendications 1 à 3, caractérisé en ce que le composant (2) dont la forme se modifie, est modifiable en longueur, en particulier est modifiable en longueur perpendiculairement au niveau de liquide.

5. Dispositif selon l'une quelconque des revendications 1 à 4, caractérisé en ce que la force de rappel du composant (2) dont la forme se modifie, est appliquée par un ressort (5).

6. Dispositif selon l'une quelconque des revendications 1 à 5, caractérisé en ce que le composant dont la forme se modifie, est réalisé en forme de soufflet (2), en forme de cylindre ou analogues.

7. Dispositif selon l'une quelconque des revendications 1 à 6, caractérisé en ce que le composant (2) dont la forme se modifie, est creux, son espace interne (26) se trouvant en liaison avec un niveau de pression ($P_3$, $P_u$) différent par rapport au niveau de pression externe ($P_1$, $P_2$) du composant (2).

8. Dispositif selon la revendication 7, caractérisé en ce qu'on prévoit un conduit (4) qui relie l'espace interne (26) du composant (2) dont la forme se modifie avec la pression ($P_u$) de l'air ambiant ou avec la pression d'eau ($P_3$) qui règne derrière l'ouverture d'évacuation (1).

9. Dispositif selon l'une quelconque des revendications 1 à 8, caractérisé en ce que le composant (2) dont la forme se modifie, est monté dans un récipient (22), la section du composant (2) dont la forme se modifie, mobile par rapport au palier, excitant l'organe d'étranglement (3, 8).

10. Dispositif selon la revendication 9, caractérisé en ce que le composant (2) dont la forme se modifie, est monté dans une console (31) qui est montée à l'aide d'une commande (13, 14) pour pouvoir se déplacer dans le récipient (23) perpendiculairement au niveau du liquide.

11. Dispositif selon l'une quelconque des revendications 1 à 10, caractérisé en ce que l'organe d'étranglement est réalisé en forme de diaphragme (3, 8).

12. Dispositif selon l'une quelconque des revendications 1 à 11, caractérisé en ce que le composant (2) dont la forme se modifie et le diaphragme (3, 8) sont entourés par une cloche (6) comportant une ouverture d'entrée (7).

13. Dispositif selon la revendication 12, caractérisé en ce que l'ouverture d'entrée (7) de la cloche (6) présente un décalage axial (X) par rapport à l'ouverture d'évacuation (1) du récipient.

14. Dispositif selon la revendication 12 ou 13, caractérisé en ce qu'on prévoit, dans la cloche (6), en position adjacente à l'ouverture d'entrée (7), un organe d'étranglement supplémentaire (8) mobile à l'aide du composant (2) dont la forme se modifie.

15. Dispositif selon l'une quelconque des revendications 9 à 14, caractérisé en ce que le composant (2) dont la forme se modifie, excite directement ou indirectement via une courbe de commande (9, 10) l'organe d'étranglement (2), respectivement les organes d'étranglement (2, 8).

16. Dispositif selon l'une quelconque des revendications 1 à 15, caractérisé en ce qu'on prévoit un mécanisme (12, 15) pour régler la force de rappel du composant (2) dont la forme se modifie.

FIG.1

FIG.2

FIG.3

FIG.4

FIG.5

FIG.6

FIG.7

FIG.8

FIG.9

FIG.10

FIG.11

FIG.12

FIG.13